# FASCICULE DE BREVET EUROPEEN

(11) **EP 1 166 375 B1**
(45) Date de publication et mention de la délivrance du brevet: **12.11.2003**
(21) Numéro de dépôt: 00910923.2
(22) Date de dépôt: 10.03.2000
(51) Int. Cl.: H01M 2/10

(54) **COFFRE POUR ENSEMBLE DE BATTERIES D'ACCUMULATEURS ELECTRIQUES**
KASTEN FÜR ELEKTRISCHE AKKUMULATOREINHEIT
BOX FOR SET OF ELECTRIC STORAGE BATTERIES

(30) Priorité: 11.03.1999 FR 9903013
(43) Date de publication de la demande: 02.01.2002
(73) Titulaire: HAWKER SA, 62000 Arras (FR)
(72) Inventeur: DREULLE, Claude, Maurice, F-62217 Beaurains (FR); LENAIN, Pierre, Georges, F-62000 Arras (FR)
(74) Mandataire: Neyret, Daniel
(86) Numéro de dépôt international: FR0000597
(87) Numéro de publication internationale: WO00054348

(56) Documents cités:
- PATENT ABSTRACTS OF JAPAN vol. 010, no. 095 (E-395), 12 avril 1986 (1986-04-12) & JP 60 236454 A (FUJITSU KK), 25 novembre 1985 (1985-11-25)

## Description

La présente invention se rapporte à un coffre pour ensemble de batteries d'accumulateurs électriques pour véhicule automoteur électrique, notamment pour engin de manutention, particulièrement adapté pour recevoir des batteries constituées d'éléments étanches à recombinaison de gaz.

Elle rapporte également à un coffrage modulaire constitué par une association de tels offres.

Dans l'état de la technique, les ensembles de batteries sont constitués par une association d'éléments unitaires rechargeables capables chacun de délivrer une tension de l'ordre de 2 volts, et disposés en parallèles ou en série dans un coffre, ce coffre venant se loger dans un emplacement du véhicule prévu à cet effet pour constituer la source d'alimentation du véhicule.

On conçoit que, pour diminuer au maximum le nombre de cycles de charge et de décharge des batteries, et donc pour augmenter la durée de vie de celles-ci, il est nécessaire d'embarquer à bord du véhicule le plus grand nombre possible d'éléments.

L'augmentation du nombre d'éléments a toutefois pour effet d'augmenter la chaleur dégagée lors du fonctionnement.

Le document JP-A-60 236 454 montre un coffre comportant des rails, destinés à recevoir des supports amovibles, dans lequel sont placées les batteries, et non les batteries elles-mêmes. Il ne constitue qu'un élément de rangement de batteries, rendant possible l'appréciation visuelle du nombre et de l'état des batteries qu'il renferme.

Au vu de ce qui précède, le but de l'invention est de foumir un coffre pour ensemble de batteries d'accumulateurs électriques capable de contenir un grand nombre de batteries tout en pouvant efficacement évacuer la chaleur dégagée au cours du fonctionnement.

Elle a donc pour objet un coffre pour ensemble de batteries d'accumulateurs électriques pour véhicule automoteur électrique, comportant au moins deux parois latérales mutuellement opposées s'étendant de façon sensiblement parallèle et délimitant entre elles un logement de réception des batteries, caractérisé en ce que chaque paroi latérale est munie intérieurement d'une série d'éléments de support en saillie s'étendant le long de la paroi, chaque élément de support formant, conjointement avec un élément de support de l'autre paroi latérale, un support pour un étage de batteries d'accumulateur.

Le coffre selon l'invention peut en outre comporter une ou plusieurs des caractéristiques suivantes, prises isolément ou selon toutes les combinaisons techniquement possibles :
- les éléments de support sont constitués par des tablettes rapportées ;
- les éléments de support sont formés par des pliures longitudinales des parois latérales;
- les éléments de support s'étendent le long des parois de façon inclinée par rapport à l'horizontale ;
- les éléments de support comportent en outre des moyens de maintien des batteries disposés au voisinage d'au moins une des extrémités libres des parois latérales ;
- il comporte en outre deux flasques d'extrémité montés sur les extrémités libres des parois latérales ;
- l'un des flasques au moins est monté de façon amovible sur les parois latérales ;
- les flasques d'extrémités sont munis chacun d'un point de préhension destiné à coopérer avec un appareil de levage.

L'invention a également pour objet un coffrage pour ensemble de batteries d'accumulateurs électriques pour véhicule automoteur électrique, caractérisé en ce qu'il comporte un ensemble modulaire de coffres tels que définis ci-dessus, électriquement connectés.

D'autres caractéristiques et avantages ressortiront de la description suivante, donnée uniquement à titre d'exemple, et faite en référence aux dessins annexés sur lesquels :
- la figure 1 est une vue en perspective éclatée d'un coffre pour ensemble de batteries conforme à l'invention ;
- la figure 2 est une vue en coupe longitudinale du support de la figure 1, à l'état assemblé;
- la figure 3 est une vue de côté du coffre de la figure 1, à l'état assemblé ;
- la figure 4 est une vue en perspective éclatée d'un autre mode de réalisation d'un coffre conforme à l'invention ; et
- la figure 5 est une vue de côté du coffre de la figure 4.

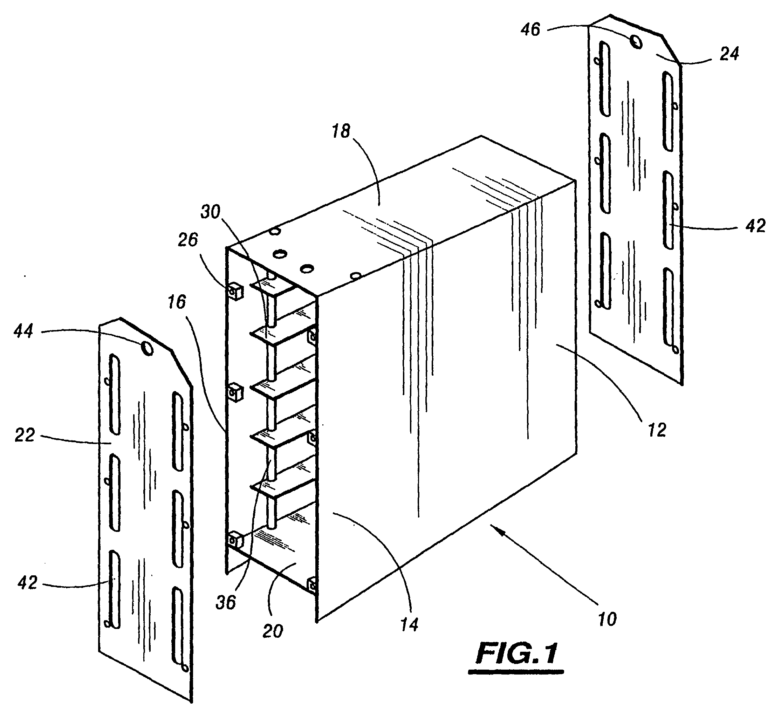

Sur les figures 1 à 3, on a représenté un premier exemple de réalisation d'un coffre conforme à l'invention, désigné par la référence numérique générale 10, positionné de façon supposée verticale.

Il est destiné à recevoir un ensemble de batteries d'accumulateurs électriques, constituées par exemple d'éléments étanches à recombinaison de gaz, et est destiné à être placé dans un engin automoteur électrique, par exemple un engin de manutention.

Le coffre 10 est principalement constitué par un caisson 12 ayant généralement la forme d'un profilé rectangulaire et comportant deux parois latérales 14 et 16, une paroi supérieure 18 et un fond 20.

Deux flasques d'extrémités 22 et 24 viennent se monter par exemple par vissage sur les extrémités libre du caisson 12, au moyen de pattes de fixation, telles que 26, prévues sur le caisson 12 au voisinage des extrémités libres des parois latérales 14 et 16. L'un au moins des flasques 22 et 24 est monté de façon amovible sur le caisson 12.

On notera que le coffre 10 est réalisé en un matériau approprié pour l'utilisation envisagée, par exemple un métal ou une matière plastique.

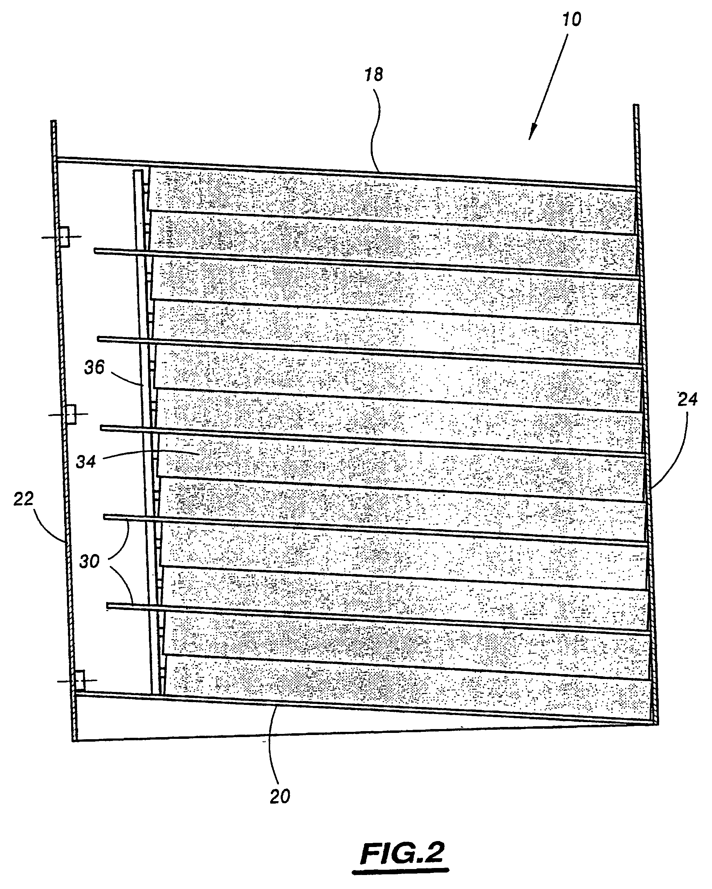

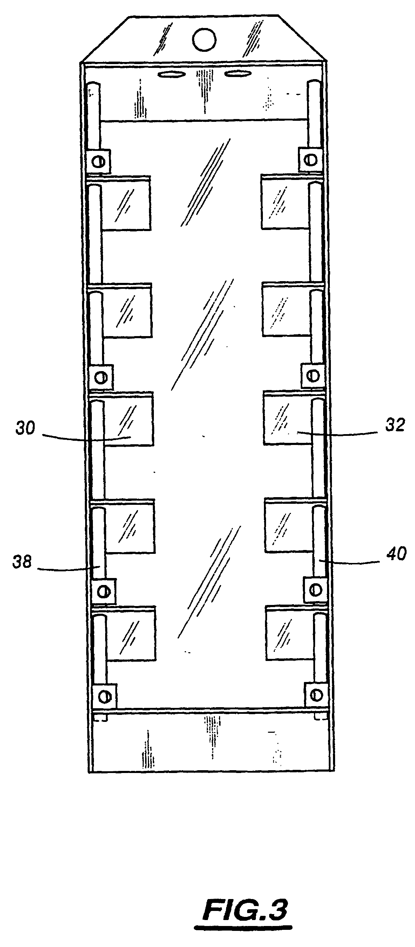

Comme cela est également visible sur les figures 2 et 3, les parois latérales 14 et 16 sont chacune munies d'éléments de support rapportés, tels que 30 et 32, régulièrement répartis selon la hauteur des parois 14 et 16, chaque élément de support s'étendant le long de la paroi correspondante et formant conjointement avec un élément de support de l'autre paroi latérale un support sur lequel repose un ou plusieurs étages de batteries d'accumulateurs, telles que 34.

Comme on le voit en particulier sur la figure 3, les éléments de support 30 et 32 formant un même étage de batteries s'étendent l'un vers l'autre de façon coplanaire et sont séparés l'un de l'autre d'une distance inférieure à la longueur ou à la largeur des batteries.

De préférence, les éléments de support 30 et 32 s'étendent le long des parois latérales 14 et 16 de façon inclinée par rapport à l'horizontale, de manière à permettre un chargement aisé du coffre 10.

Des moyens de maintien, désignés par la référence numérique générale 36, sont prévus à une extrémité au moins des éléments de support 30 et 32 afin de maintenir les éléments de batteries en position.

Par exemple et comme représenté, ces moyens de maintien 36 sont constitués par des butés montées de façon fixe ou amovible sur les éléments de support 30 et 32, réalisés sous la forme de tiges 38 et 40 s'étendant de haut en bas au travers des éléments de support 30 et 32.

L'assemblage du caisson 12 et des flasques d'extrémités 22 et 24 constitue le coffre, ce coffre permettant de recevoir un nombre relativement élevé de batteries d'accumulateurs électriques sous la forme de plusieurs étages de batteries supportées chacune par deux éléments de supports 30 et 32.

On conçoit que ce coffre 10 permet d'assurer une évacuation de la chaleur engendrée lors du fonctionnement en permettant une circulation d'air dans l'espace ménagé entre les étages de batteries correspondant à l'épaisseur des éléments de support 30 et 32.

Afin d'améliorer l'aération des batteries, les flasques 22 et 24 peuvent être avantageusement dotées d'ouïes d'aération telles que 42.

Le coffre 10 peut en outre être doté de points de préhension constitués par des orifices 44 et 46 ménagés dans les flasques d'extrémités 22 et 24 et destinés à recevoir un crochet d'un appareil de levage en vue de la mise en place du coffre dans un véhicule électrique en vue de son alimentation et le remplacement de ce demier.

Dans l'exemple de réalisation représentée aux figures 1 et 2, les éléments de support sont constitués par des tablettes rapportées, fixées par exemple par soudage aux parois latérales 14 et 16.

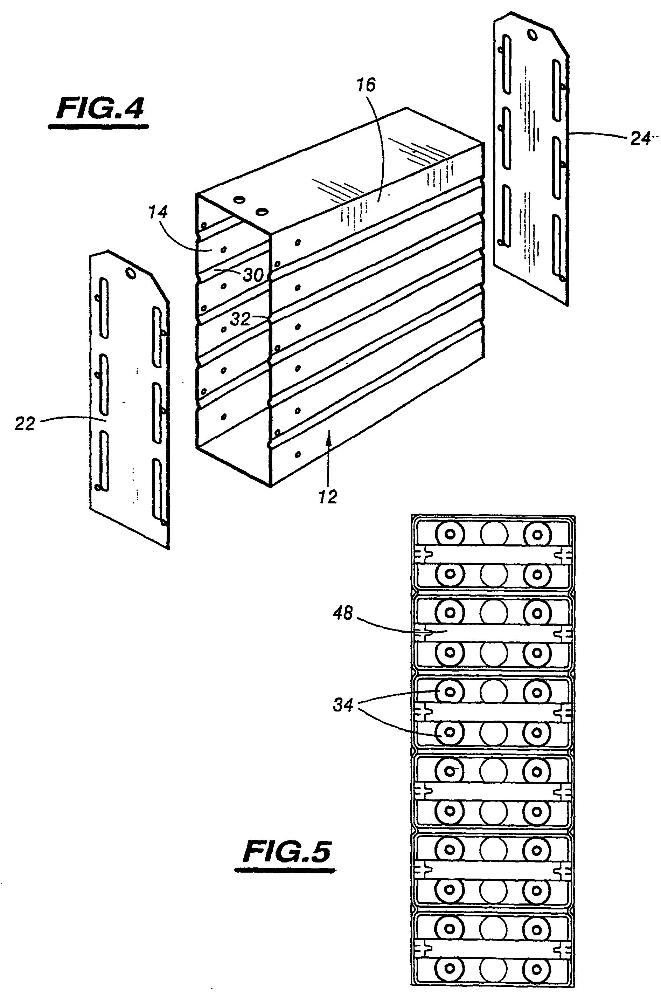

Comme représenté sur les figures 4 et 5, qui représentent un autre mode de réalisation du coffre conforme à l'invention, et sur lesquelles des éléments identiques à ceux des figures 1 à 3 portent les mêmes numéros de référence, les éléments de supports 30 et 32 peuvent également être formés par pliages des parois latérales 14 et 16.

On voit également qu'il est possible de former les éléments de support 30 et 32 de manière à ce qu'ils s'étendent de façon horizontale le long des parois latérales.

Les moyens de maintien des batteries peuvent également être formés sous la forme d'entretoise, tel que 48, s'étendant entre les parois latérales 14 et 16 au niveau de chaque étage de batteries.

On notera enfin, qu'en fonction de l'espace disponible dans le véhicule et de l'énergie électrique à délivrer, il est possible de réaliser un coffrage modulaire par association de plusieurs coffres identiques à ceux décrits précédemment, connectés électriquement en série ou en parallèle.

On conçoit que l'invention qui vient d'être décrite, qui utilise un coffre doté de flasques latéraux dont au moins l'un est amovible et de supports de batteries permettant d'embarquer un nombre relativement important de batteries dans un encombrement réduit tout en autorisant une aération efficace de ces dernières, permet d'augmenter considérablement la durée de vie de la batterie ainsi agencée, dans la mesure où elle permet de limiter considérablement le nombre de cycles de décharge et de recharge.

En outre, elle rend l'opération de montage des éléments de batteries particulièrement aisée et facilite grandement les interventions de maintenance dans la mesure où la présence des ouïes d'aération dans les flasques latéraux rend les batteries accessibles de l'extérieure.

## Revendications

1. Coffre pour ensemble de batteries (34) d'accumulateurs électriques pour véhicule automoteur électrique, comportant au moins deux parois latérales (14, 16) mutuellement opposées s'étendant de façon sensiblement parallèle et délimitant entre elles un logement de réception des batteries, **caractérisé en ce que** chaque paroi latérale (14, 16) est munie intérieurement d'une série d'éléments de support (30, 32) en saillie s'étendant le long de la paroi, chaque élément de support (30, 32) formant, conjointement avec un élément de support (30, 32) de l'autre paroi latérale, un support pour au moins un étage de batteries (34) d'accumulateur.

2. Coffre selon la revendication 1, **caractérisé en ce que** les éléments de support (30, 32) sont constitués par des tablettes rapportées.

3. Coffre selon la revendication 1, **caractérisé en ce que** les éléments de support (30,32) sont formés par des pliures longitudinales des parois latérales.

4. Coffre selon l'une quelconque des revendications 1 à 3, **caractérisé en ce que** les éléments de support s'étendent le long des parois (14, 16) de façon inclinée par rapport à l'horizontale.

5. Coffre selon l'une quelconque des revendications 1 à 4, **caractérisé en ce que** les éléments de support comportent en outre des moyens (36) de maintien des batteries disposés au voisinage d'au moins une des extrémités libres des parois latérales (14, 16).

6. Coffre selon l'une quelconque des revendications 1 à 5, **caractérisé en ce qu'**il comporte en outre deux flasques d'extrémité (22, 24) montés sur les extrémités libres des parois latérales.

7. Coffre selon la revendication 6, **caractérisé en ce que** l'un des flasques (22, 24) au moins est monté de façon amovible sur les parois latérales (14, 16).

8. Coffre selon l'une des revendications 6 et 7, **caractérisé en ce que** les flasques d'extrémité sont munis chacun d'un point de préhension (44, 46) destiné à coopérer avec un appareil de levage.

9. Coffrage pour ensemble de batteries d'accumulateurs électriques pour véhicule automoteur électrique, **caractérisé en ce qu'**il comporte un ensemble modulaire de coffres (10) selon l'une quelconque des revendications 1 à 8, électriquement connectés.

## Patentansprüche

1. Behälter für einen Satz elektrischer Akkumulatorbatterien (34) für Elektrofahrzeuge, umfassend mindestens zwei Seitenwände (14, 16), die einander gegenüberliegen, wobei sie im wesentlichen parallel verlaufen und zwischen sich einen Aufnahmeraum für die Batterien begrenzen, **dadurch gekennzeichnet, daß** jede Seitenwand (14, 16) innen mit einer Reihe von Halteelementen (30, 32) ausgestattet ist, die sich entlang der Wand vorspringend erstrecken, wobei jedes Halteelement (30, 32) zusammen mit einem Halteelement (30, 32) der anderen Seitenwand eine Halterung für mindestens eine Etage von Akkumulatorbatterien (34) bildet.

2. Behälter nach Anspruch 1, **dadurch gekennzeichnet, daß** die Halteelemente (30, 32) aus zusammengesetzten Platten gebildet werden.

3. Behälter nach Anspruch 1, **dadurch gekennzeichnet, daß** die Halteelemente (30, 32) aus länglichen Faltungen der Seitenwände gebildet sind.

4. Behälter nach einem der Ansprüche 1 bis 3, **dadurch gekennzeichnet, daß** die Halteelemente sich entlang der Wände (14, 16) erstrecken, wobei sie in bezug auf die Horizontale geneigt sind.

5. Behälter nach einem der Ansprüche 1 bis 4, **dadurch gekennzeichnet, daß** die Halteelemente des weiteren Mittel zur Wartung (36) der Batterien umfassen, die benachbart zu mindestens einem der freien Ende der Seitenwände (14, 16) liegen.

6. Behälter nach einem der Ansprüche 1 bis 5, **dadurch gekennzeichnet, daß** er des weiteren zwei Endflansche (22, 24) aufweist, die an den freien Enden der Seitenwände montiert sind.

7. Behälter nach Anspruch 6, **dadurch gekennzeichnet, daß** mindestens einer der Endflansche (22, 24) abnehmbar an den Seitenwänden (14, 16) montiert ist.

8. Behälter nach einem der Ansprüche 6 und 7, **dadurch gekennzeichnet, daß** die Endflansche jeweils mit einer Greifstelle (44, 46) ausgestattet sind, die zum Zusammenwirken mit einer Hebevorrichtung bestimmt sind.

9. Katen für einen Satz von elektrischen Akkumulatorbatterien für Elektrofahrzeuge, **dadurch gekennzeichnet, daß** er eine modulare Gruppe von Behältern (10) nach einem der Ansprüche 1 bis 8 umfaßt, die elektrisch miteinander verbunden sind.

## Claims

1. Box for set of electric storage batteries (34) for an electric motor vehicle, comprising at least two mutually opposing lateral walls (14, 16) extending substantially parallel and delimiting between them a compartment for receiving the batteries, **characterised in that** each lateral wall (14, 16) is provided internally with a series of projecting support elements (30, 32) extending along the wall, each support element (30, 32) forming, jointly with a support element (30, 32) of the other lateral wall, a support for at least one rack of storage batteries (34).

2. Box as claimed in Claim 1, **characterised in that** the support elements (30, 32) consist of attached shelves.

3. Box as claimed in Claim 1, **characterised in that** the support elements (30, 32) are formed by longitudinal folds in the lateral walls.

4. Box as claimed in any one of Claims 1 to 3, **characterised in that** the support elements extend along the walls (14, 16) in an inclined manner with respect to the horizontal.

5. Box as claimed in any one of Claims 1 to 4, **characterised in that** the support elements also include means (36) for retaining the batteries disposed in the vicinity of at least one of the free ends of the lateral walls (14, 16).

6. Box as claimed in any one of Claims 1 to 5, **characterised in that** it also comprises two end panels (22, 24) mounted on the free ends of the lateral walls.

7. Box as claimed in Claim 6, **characterised in that** at least one of the end panels (22, 24) is mounted on the lateral walls (14, 16) so as to be removable.

8. Box as claimed in one of Claims 6 and 7, **characterised in that** the end panels are each provided with a gripping point (44, 46) intended to co-operate with a lifting tackle.

9. Casing for a set of electric storage batteries for an electric motor vehicle, **characterised in that** it comprises a modular assembly of boxes (10) as claimed in any one of Claims 1 to 8 which are electrically connected.
